# EUROPÄISCHE PATENTSCHRIFT

(11) **EP 1 814 697 B1**
(45) Veröffentlichungstag und Bekanntmachung des Hinweises auf die Patenterteilung: **29.09.2010**
(21) Anmeldenummer: 05810754.1
(22) Anmeldetag: 28.10.2005
(51) Int. Cl.: B25B 11/00, F16K 31/08, F16K 31/383

(54) **VORGESTEUERTES VENTIL MIT EINEM UMSCHLOSSENEN, MAGNETISCHEN ODER MAGNETISIERBAREN VENTILKÖRPER**
PILOT VALVE WITH AN ENCLOSED MAGNETIC OR MAGNETISABLE VALVE BODY
SOUPAPE PILOTEE COMPRENANT UN CORPS DE SOUPAPE MAGNETIQUE OU POUVANT ETRE MAGNETISE

(30) Priorität: 29.10.2004 DE 102004052947
(43) Veröffentlichungstag der Anmeldung: 08.08.2007
(73) Patentinhaber: Zimmer GmbH Technische Werkstätten, 77866 Rheinau (DE); Homag Holzbearbeitungssysteme AG, 72296 Schopfloch (DE)
(72) Erfinder: ZIMMER, Günther, 77866 Rheinau (DE); ZIMMER, Martin, 77866 Rheinau (DE); STURM, Gotthilf, 72293 Glatten-Neuneck (DE)
(74) Vertreter: Thämer, Wolfgang
(86) Internationale Anmeldenummer: PCT/DE2005/001940
(87) Internationale Veröffentlichungsnummer: WO 2006/045300

(56) Entgegenhaltungen:
- DE-A1- 19 613 094
- DE-C1- 10 241 227
- GB-A- 1 444 393
- US-B1- 6 182 955

## Beschreibung

Die Erfindung betrifft ein Ventil mit einem vorsteuernden magnetischen oder magnetisierbaren Vorsteuerventilglied und einem Hauptventilglied für ein in einer Holzbearbeitungsmaschine verwendetes Vakuumsystems, wobei die Holzbearbeitungsmaschine einen mit mindestens einer Vakuumzone durchzogenen Spanntisch aufweist, der zwischen Vakuum führenden Kanälen und der Spanntischoberfläche mindestens eine Bohrung zur Aufnahme des unter der Spanntischoberfläche sitzenden Ventils hat, wobei auf oder am Spanntisch ein das Werkstück tragender Saugadapter angeordnet ist, der in seiner der Spanntischoberfläche zugewandten Seite zumindest bereichsweise aus einem Werkstoff oder einer Vorrichtung besteht, der oder die durch magnetische Wechselwirkung zumindest das Vorsteuerventilglied anzieht um dieses zu öffnen, so dass der Saugadapter auf den Spanntisch und/oder das Werkstück auf den Saugadapter gesaugt wird bzw. werden, wobei das Ventil ein Saugadaptergehäuse hat, in dem das Hauptventilglied und das Vorsteuerventilglied beweglich gelagert und geführt sind, wobei das Saugadaptergehäuse mindestens eine Hauptabsaugöffnung und mindestens eine Ansaugöffnung hat.

Aus der DE 102 41 227 C1 ist ein derartiges Ventil bekannt. Bei diesem Ventil wird das Vorsteuerventil magnetisch geöffnet, während das Hauptventil mittels Federkraft geöffnet wird. Beim Aufsetzen des mit Eisenteilen durchzogenen Spannadapters löst die zwischen den Eisenteilen und dem magnetischen Ventilglied wirkende Magnetkraft das Ventilglied vom Dichtsitz. Nach dem Öffnen des Vorsteuerventils öffnet das gegen die Wirkung einer mechanischen Öffnungsfeder durch Unterdruck verschlossene Hauptventil. Konstruktionsbedingt steht somit beim unbelasteten Ventil das Hauptventilglied immer offen. Dadurch wird beim Erzeugen eines Vakuums im Spannbalken bzw. Maschinentisch zunächst Umgebungsluft durch die Ventile in die Vakuumzonen gesaugt. Die Ventile schließen erst, wenn der Unterdruck in den Vakuumzonen einen bestimmten Wert erreicht hat. Bis dahin wird durch die vorübergehende Luftzufuhr über die Ventile zusätzlich Energie für die Vakuumerzeugung benötigt. Außerdem kann in dieser Phase in die Ventilsiebe und die Ventile Holzstaub gesaugt werden.

Ferner ist aus der DE 196 13 094 C2 ein einstufiges Ventil bekannt. Dieses Ventil hat ein Ventilglied mit einer so großen Dichtfläche, dass das durch den Unterdruck angesaugte Ventilglied sich beim Aufsetzen des mit Eisenteilen durchzogenen Spannadapters nicht öffnet. Die zwischen den Eisenteilen und dem magnetischen Ventilglied wirkende Magnetkraft reicht nicht aus, um das Ventilglied vom Dichtsitz zu lösen. Folglich müssen hierzu die Vakuumzonen des Spanntisches oder Spannbalkens belüftet werden. Dies bedeutet einen Zeit- und Energieverlust.

Der vorliegenden Erfindung liegt die Problemstellung zugrunde, ein Ventil für eine derartige Holzbearbeitungsmaschine zu entwickeln, das ein schnelles Öffnen bei anliegendem Unterdruck ermöglicht, bei unbeabsichtigtem Druckabfall schließt, in allen Betriebssituationen eine sichere Funktion gewährleistet, problemlos montier- und wartbar ist und den Energiebedarf für das Erzeugen des Vakuums verringert.

Diese Problemstellung wird mit den Merkmalen des Hauptanspruches gelöst. Dazu ist das Hauptventilglied ein geschlossenes Gehäuse zum formschlüssigen Umgreifen und zur - mit Spiel - führenden Aufnahme des Vorsteuerventilgliedes, wobei in das Gehäuse mindestens ein Vorsteuerkanal und mindestens eine Vorsteuerbohrung mündet. Die Hauptabsaugöffnung und der Vorsteuerkanal sind der entsprechenden Vakuumzone zugewandt, wenn das Ventil in der Bohrung des Spanntisches sitzt. Das Vorsteuerventilglied ist im Hauptventilglied zwischen der Ansaugöffnung und dem Vorsteuerkanal vor mindestens einem Vorsteuerventilsitz angeordnet und liegt - bei unbetätigtem Ventil - auf dem Vorsteuerventilsitz dichtend auf. Die Vorsteuerbohrung ist - bei betätigtem Ventil - durch das anliegende Vorsteuerventilglied und/oder durch das dichtende Anliegen des Hauptventilglieds an mindestens einem Teil des Saugventilgehäuses verschlossen. Das Hauptventilglied ist zwischen der Ansaugöffnung und der Hauptabsaugöffnung vor einem Hauptventildichtsitz angeordnet und liegt - bei unbetätigtem Ventil - auf dem Hauptventildichtsitz dichtend auf. Das Vorsteuerventilglied bewegt das Hauptventilglied zumindest bei einem Teil seines gesamten Öffnungshubes in Öffnungshubrichtung mit.

Bei dieser Ventilkonstruktion sind im unbetätigten Zustand das Hauptventil und das Vorsteuerventil immer geschlossen. Dadurch benötigt man zum Vakuumisieren der Vakuumzonen im Maschinentisch weniger Energie als bei Ventilen, die vor dem Absaugen offen stehen. Auch ist die Verschmutzungsgefahr für die Ventile kleiner, da an den Ventilsieben in dieser Phase kein sägemehl- bzw. schmutztransportierender Sog entsteht.

Da nun das Hauptventilglied ein geschlossenes - nur durch Bohrungen für die Vorsteuerung durchbrochenes - Gehäuse ist, das das Vorsteuerventilglied umgibt, wird die Verschmutzungsgefahr im Hauptventilglied zusätzlich verringert. Sobald das Vorsteuerventilglied das Hauptsteuerventilglied anhebt, verschließt sich die dem Staub transportierenden Gasstrom zugewandte Vorsteuerbohrung. Ein Durchströmen des Innenraums des Hauptventilglieds ist ausgeschlossen. Damit kann sich dort auch kein Staub oder anderer Schmutz absetzen.

Durch die vereinfachte Gehäuseform des Hauptventilglieds ergeben sich günstige Strömungsbedingungen im Saugventilgehäuse. Letzteres ist weitgehend glatt und kantenfrei, so dass das offene Ventil dem - der Magnetkraft entgegenwirkenden - saugenden Luftstrom wenig Widerstand bietet. Zudem erlaubt die neue Gehäuseform des Hauptventilglieds dünne Wandungen, wodurch das magnetische oder magnetisierbare Vorsteuerventilglied ohne geometrische Änderung der Außenabmessungen des Saugventilgehäuses bei kleinerem Gewicht des leeren Hauptventilgliedes vergrößert werden kann. Hierdurch erhöht sich die Magnetkraft des Vorsteuerventilglieds. In Kombination mit der Gewichtsreduktion ergibt sich folglich ein schnelleres und sichereres Ansprechen des Ventils beim Öffnen und Schließen.

In der Regel sind im Saugadapter ferromagnetische Metalle integriert, die die magnetischen Vorsteuerventilglieder von deren jeweiligem Dichtsitz abheben. Ggf. können anstelle der ferromagnetischen Metalle in den Saugadaptern Vorrichtungen verwendet werden, die über Elektromagnete entsprechende aus Magnet- oder Eisenwerkstoffen gefertigte Vorsteuerventilglieder im Saugventil magnetisch anziehen.

Weitere Einzelheiten der Erfindung ergeben sich aus den Unteransprüchen und der nachfolgenden Beschreibung schematisch dargestellter Ausführungsformen.
- Figur 1:: Bekanntes Saugventil im Längsschnitt im geschlossenen Schaltzustand (geschlossene Vorsteuerventilkammer);
- Figur 2:: Saugventil nach Figur 1 in der Draufsicht;
- Figur 3:: Hauptventilglied nach Figur 1 in dimetrischer Darstellung;
- Figur 4:: Erfindungsgemäßes Saugventil im Längsschnitt im geschlossenen Schaltzustand (geschlossene Vorsteuer- ventilkammer) ;
- Figur 5:: Saugventil nach Figur 4 in der Draufsicht mit Teilschnitten;
- Figur 6:: Saugventil nach Figur 4 beim Öffnen;
- Figur 7:: Saugventil nach Figur 4 in Offenstellung;
- Figur 8:: Spannbalken und Saugadapter in der Draufsicht;
- Figur 9:: dimetrische Darstellung des Spannbalkens und des Saugadapters.

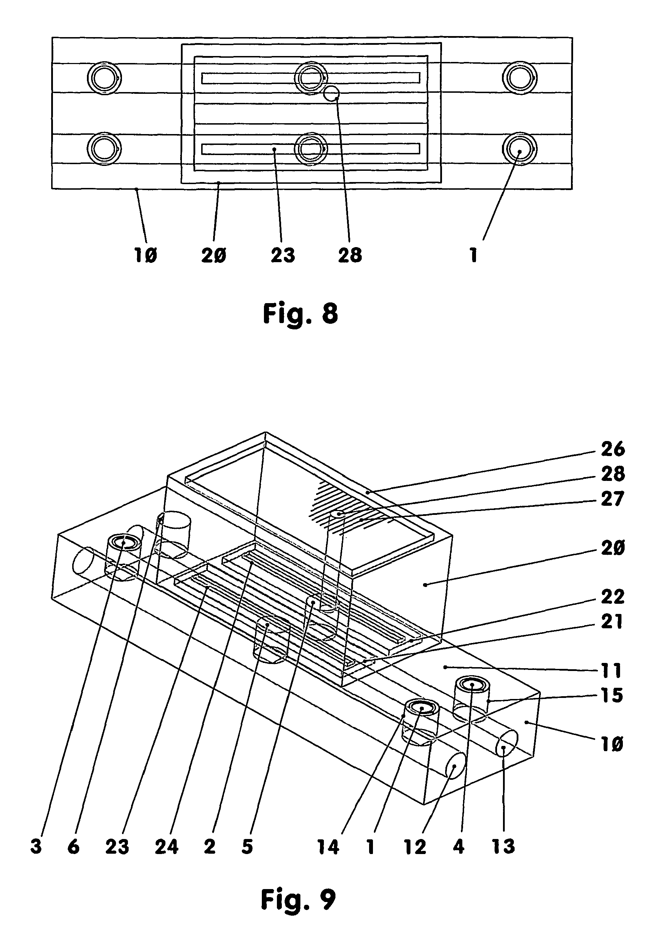

Die Figur 9 zeigt schematisch einen Spann- bzw. Maschinentisch (10) einer Holzbearbeitungsmaschine. Auf dem hier als Spannbalken (10) ausgebildeten Spanntisch ist ein Saugadapter (20) angeordnet. Letzterer trägt das - hier nicht dargestellte - Werkstück.

Der Spannbalken (10) ist ein Gehäuse oder eine Tragkonstruktion mit einer in der Regel ebenen Tischoberfläche (11). In oder unter der Tischoberfläche (11) sind eine oder mehrere Vakuumzonen integriert. Im Ausführungsbeispiel sind z.B. zwei Vakuumzonen in Form von Kanalbohrungen (12, 13) gezeigt, wobei ggf. beide Vakuumzonen an einer Saugpumpe angeschlossen sein können. Beide Kanalbohrungen (12, 13) sind über Querbohrungen (14, 15) mit der Tischoberfläche (11) verbunden. Die Querbohrungen (14, 15) sind z.B. normal zur Tischoberfläche (11) ausgerichtet und nehmen jeweils ein magnetisch betätigbares Saugventil (1-6) auf.

Der Saugadapter (20) ist ein Gehäuse oder ein Gestell, das auf der Tischoberfläche (11) aufliegt. Er hat zur Tischoberfläche (11) hin z.B. zwei untere, quaderförmige Vertiefungen (21, 22), von denen jede über einem Saugventil (2, 5) liegt. In jeder Vertiefung (21, 22) ist z.B. ein Vierkantstab (23, 24) aus ferromagnetischem Material eingebaut. Die Vierkantstäbe (23, 24) sind parallel zu den Längskanten der Vertiefungen (21, 22) orientiert. Anstelle der Vierkantstäbe (23, 24) können im Saugadapter (20) gegenüber den Saugventilen (1-6) auch ferromagnetische Gehäusebereiche vorhanden sein. Auch kann der gesamte Saugadapter (20) aus einem derartigen Material gefertigt sein.

Der Saugadapter (20) hat an seiner der Tischoberfläche (11) abgewandten Seite eine z.B. rahmenförmige Werkstückaufnahmefläche (26), die eine quaderförmige, obere Vertiefung (27) umschließt. Die obere Vertiefung (27) kommuniziert mit der unteren Vertiefung (22) über eine Bohrung (28). Die den einzelnen Vakuumzonen (12, 13) zugeordneten Vertiefungen (21; 22, 27) können beispielsweise mittels je eines automatisch oder manuell betätigbaren Ventils zur Belüftung mit der Umgebung kommunizieren.

Bei einem Aufsetzen des Saugadapters (20) auf dem über die Kanalbohrungen (12, 13) vakuumisierten Spannbalken (10), werden die Saugventile (2, 5) durch die Annäherung der Vierkantstäbe (23, 24) magnetisch geöffnet. Die anderen Saugventile (1, 3; 4, 6) bleiben geschlossen. In der vorderen, unteren Vertiefung (21) entsteht Unterdruck, wodurch der Saugadapter (20) rutschfest auf der Tischoberfläche (11) haftet. In der hinteren, unteren Vertiefung (22) entsteht kein Unterdruck, solange kein Werkstück die Werkstückaufnahmefläche (26) abdeckt. Diese obere Vertiefung (27) ist pneumatisch über die Bohrung (28) mit der Umgebung verbunden. Nach einem Auflegen des Werkstücks entsteht in beiden Vertiefungen (22, 27) ein das Werkstück fixierender Unterdruck.

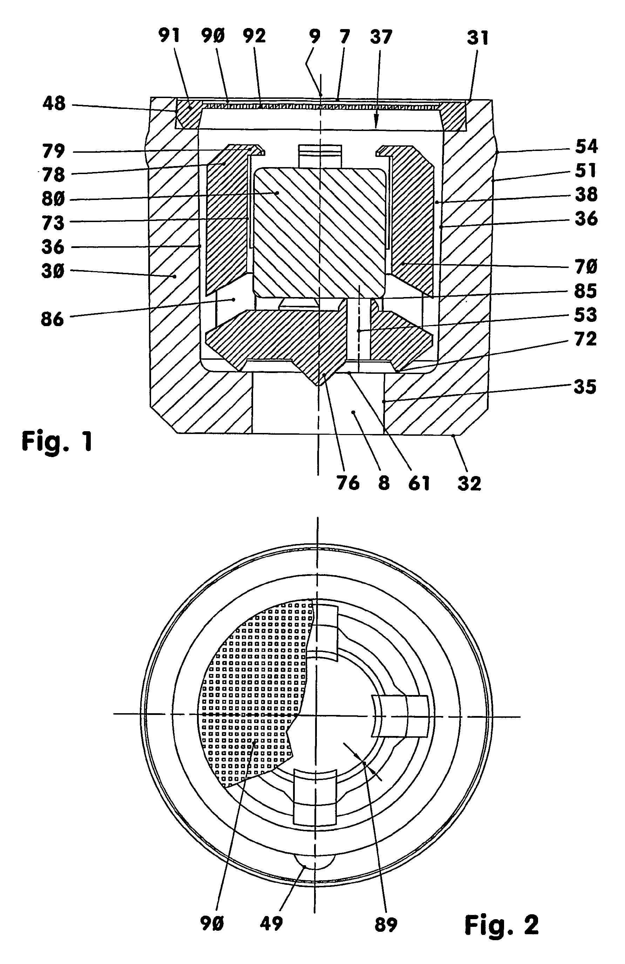

Die Figuren 1 bis 3 zeigen ein aus dem Stand der Technik bekanntes Saugventil (2, 5) oder Teile davon. Das Saugventil (2, 5) hat ein im Wesentlichen rohrförmiges Gehäuse (30), in dessen Bohrung (35, 36) unter einem als Deckel verwendeten Sieb (90) ein Haupt- (70) und ein Vorsteuerventilglied (80) angeordnet sind.

Das Gehäuse (30), bzw. das Saugventilgehäuse, hat eine zylindrische Mantelfläche (51), dessen Gesamtdurchmesser beispielsweise 14 mm beträgt und das oben und unten durch die z.B. planen Stirnflächen (31) und (32) begrenzt ist. Am Übergang der zylindrischen Mantelfläche (51) zu der unteren Stirnfläche (32) befindet sich z.B. eine 45°-Anfasung, die die Montage des jeweiligen Saugventils (1-6) erleichtert. Ggf. sind an der zylindrischen Mantelfläche (51) Dichtwülste (54) angeformt. Die Dichtwülste (54) haben z.B. einen kreisabschnittsförmig über die Mantelfläche (51) überstehenden Einzelquerschnitt.

Nach Figur 1 hat das Gehäuse (30), das z.B. aus einem elastischen Kunststoff - beispielsweise TPU mit einer Härte von 90 Shore - besteht, eine von unten nach oben gerichtete - sich z.B. stufenweise aufweitende Längsbohrung, die aus einem Ansaugbereich (35) und einem Ventilgliederbereich (36) besteht. Der Ventilgliederbereich (36) hat einen Durchmesser, der ca. 71% des Gesamtdurchmessers beträgt.

An den Ventilgliederbereich (36) schließt sich der Ansaugbereich (35) an. Sein Durchmesser umfasst ca. 37% des Gesamtdurchmessers. Zwischen dem Ventilgliederbereich (36) und dem Ansaugbereich (35) befindet sich ein Hauptventildichtsitz (61) mit z.B. planer Fläche. Diese Fläche geht über einen großen Radius in die Wandung der Bohrung (36) über.

Von oben her ist in das Gehäuse (30) eine zur Bohrung (35, 36) koaxiale Eindrehung als Siebsitzbereich (48) für ein Sieb (90) eingearbeitet. Der Siebsitzbereich (48) hat die Gestalt eines Kegelstumpfes, der sich zum oberen Rand hin verjüngt. Ggf. ist die kegelmantelige Kontur - zum Aushebeln des Siebes (90) - mit einer nahezu halbzylindrischen, nach außen gerichteten Einkerbung (49) ausgestattet.

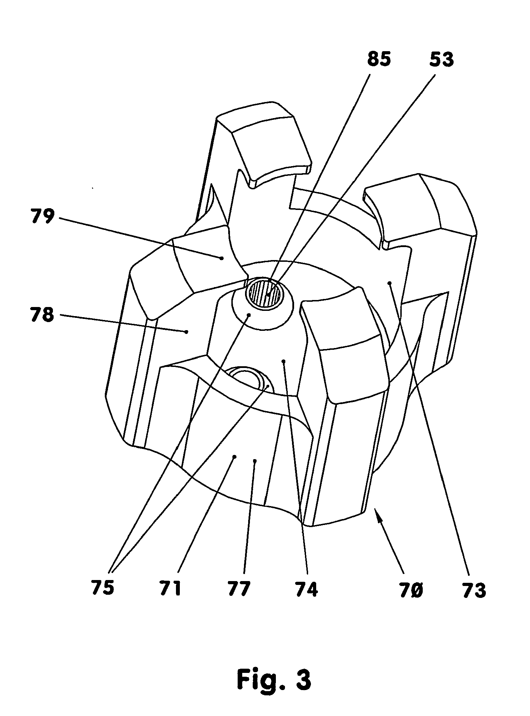

Im Ventilgliederbereich (36), dessen Höhe ca. 75% des Gesamtdurchmessers beträgt, ist ein Hauptventilglied (70) angeordnet. Das in der Längsbohrung (36) mit Spiel gelagerte Hauptventilglied (70), vgl. auch Figur 3, ist ein büchsenartiger Grundkörper (71) mit einer beispielsweise zylindrischen Ausnehmung (73) und mit z.B. vier abstehenden Kragarmen (78). Letztere sind zumindest annähernd parallel zur Mittellinie dieses Grundköpers (71) ausgerichtet und äquidistant am Umfang desselben verteilt. Die Kragarme (78) stehen zur Ausbildung von Führungsstegen zumindest außen radial über die zylindrische Grundkontur (77) des Grundkörpers (71) über. An ihren freien Enden haben sie zur geometrischen Mittellinie (9) hin kragende Umgriffe (79).

Die Ausnehmung (73) hat z.B. einen planen Boden (74) über den sich z.B. drei außermittig regelmäßig angeordnete kegelstumpfförmige Auflageelemente (75) erheben. Sie werden als erhabene Auflage für ein in der Ausnehmung (73) gelagertes Vorsteuerventilglied (80) verwendet werden. Mindestens eines dieser Auflageelemente (75) hat eine Bohrung (53), die zum Vorsteuerventil (80) hin in einem Vorsteuerventilsitz (85) endet. Die Bohrung (53) verbindet - bei einem im Gehäuse (30) aufsitzenden Hauptventilglied (70) - pneumatisch den Ventilgliederbereich (36) mit der Hauptabsaugöffnung (8).

Bei mehreren Bohrungen (53) sind diese im Hauptventilglied (70) so zu verteilen, dass die resultierende Gesamtsogkraft exzentrisch zur Mittellinie (9) an dem die Bohrungen (53) verschließenden Vorsteuerventilglied (80) angreift.

Im Bereich des Bodens (74) befinden sich beispielsweise zwei einander gegenüberliegende, radiale Durchbrüche (86), die jeweils schräg nach unten orientiert sind, vgl. Figur 1. Die beim Öffnen des Ventils durch diese Durchbrüche (86) strömende Luft erschwert ein Ablagern von Holzstaub im Innenraum des Hauptventilglieds (70).

An der Unterseite des Hauptventilglieds (70) befindet sich eine Sitzkante (72), die bei geschlossenem Ventil an der Dichtfläche (61) des Gehäuses (30) aufliegt. Von der gegenüber der Sitzkante (72) z.B. um 0,5 Millimeter zurückgesetzte Unterseitenfläche hebt ein zentraler, z.B. ein Millimeter hoher, Strömungskegel (76) nach unten ab. Der Kegelwinkel des Strömungskegels (76) beträgt ca. 90 Winkelgrade. Dieser Strömungskegel (76), der in die Hauptsaugöffnung (8) hineinragt, füllt zumindest teilweise den unteren Verwirbelungsbereich des Hauptventilglieds (70) aus. Dadurch verringert sich die störende Sogkraft beim gerade öffnenden, luftdurchströmten Ventil.

Das Hauptventilglied (70) besteht aufgrund der beiden Dichtkanten (72) und (85) sowie aufgrund der das Vorsteuerventilglied (80) mit Spiel umgreifenden Kragarme (78) und Umgriffe (79) aus einem elastischen Kunststoff oder Gummi. Ggf. werden zwei verschieden elastische Kunststoffe verwendet. Hierbei sind dann die mit den Dichtkanten (72) und (85) versehenen Zonen elastischer ausgelegt.

Das im Hauptventilglied (70) mit Radial- und Axialspiel gelagerte Vorsteuerventilglied (80) ist z.B. ein kleiner ggf. zylindrischer Stabmagnet, der bei geschlossenem Ventil auf den Auflageelementen (75) aufliegt. Seine Symmetrieachse verläuft parallel zur Mittellinie (9) des Gehäuses. Er ist in der Lage, das Hauptventilglied (70) bei der Annäherung eines Vierkantstabes (23, 24), vgl. Figuren 8 und 9, anzuheben. Der Durchmesser und die Länge des Stabmagnets (80) entsprechen 35...40% des Gehäusegesamtdurchmessers.

Oberhalb des Vorsteuerventilglieds (80) ist nach Figur 1 im Siebsitzbereich (48) das Sieb (90) z.B. eingerastet. Ggf. kann das Sieb (90) auch eingeklebt sein. Das Sieb (90), das die Ansaugöffnung (7) überspannt, hat am Umfang einen verstärkten Rand (91), der über die zentrale Siebstruktur (92) z.B. oben und unten übersteht. Das Sieb (90) dient dem Hauptventilglied (70) als oberer Anschlag und dem Gehäuse (30) als ein das Hauptventilglied (70) und das Vorsteuerventilglied (80) einschließender Deckel. Die Siebstruktur (92) wird beispielsweise aus einer Vielzahl von Bohrungen gebildet, wobei die Summe der einzelnen Bohrungsquerschnitte größer ist als die Fläche des engsten Querschnitts im Gashauptstrom. Das Sieb (90) kann bei Beschädigung oder zu Wartungszwecken ausgewechselt werden. Dazu wird ein spitzer Gegenstand am Sieb (90) in der Einkerbung (49) angesetzt, um das Sieb (90) herauszuhebeln.

Figur 1 zeigt ein Saugventil (1, 3, 4, 6) mit geschlossenem Hauptventil und geschlossenem Vorsteuerventil. Das Vorsteuerventilglied (80) befindet sich aufgrund des fehlenden magnetischen Schlusses über den Vierkantstab (23) oder (24) in seiner unteren Position. Dort liegt es auf den Auflageelementen (75) auf und verschließt dadurch den Vorsteuerkanal (53).

Das Hauptventilglied (70) liegt schon allein durch die Schwerkraft auf dem Hauptventildichtsitz (61), z.B. einer Dichtfläche, auf. Das unterhalb des Saugventils (1, 3, 4, 6) anstehende Vakuum saugt es zusätzlich gegen den Hauptventildichtsitz (61). Es (70) kontaktiert diesen mit der Dichtkante (72). Die Dichtkante (72) des aus einem ebenfalls elastischen Kunststoff hergestellten Hauptventilglieds (70) wird dabei geringfügig elastisch verformt.

Das Vorsteuerventilglied (80) liegt auf den Auflageelementen (75) auf und verschließt dabei den Vorsteuerkanal (53). Zwischen der Oberkante des Stabmagnets (80) und der Unterkante der Umgriffe (79) liegt ein Freiraum, dessen Höhe ca. 3...4 % des Gesamtdurchmessers entspricht. Durch diese Höhe ist immer gewährleistet, dass sich der Stabmagnet (80) beim Öffnen des Ventils - zunächst vom Gewicht des Hauptventilglieds (70) unbelastet - bewegen kann.

Wird nun ein Saugadapter (20) so auf den mit Vakuum beaufschlagten Spannbalken (10) gesetzt, dass ein ferromagnetischer Vierkantstab (23, 24) im Bereich über dem Saugventil (1, 3, 4, 6) zur Anlage kommt, wird das Vorsteuerventilglied (80) mittels Magnetkraft nach oben gezogen. Da hier in nur einem Auflageelement (75) der Vorsteuerkanal (53) endet, kippt der Stabmagnet (80) genau über dieses zur Seite ab.

Durch das zumindest zunächst einseitige Abkippen wird der Vorsteuerkanal (53) teilweise geöffnet. Über ihn gelangt das Vakuum in den Ventilgliederbereich (36) und den Saugkanal (38) vor die Rückseite des Hauptventilgliedes (70). Spätestens, wenn sich die Werte der rückwärtigen und der vorderseitigen Saugkraft annähern, kann der Stabmagnet (80) - das Hauptventil öffnend - das Hauptventilglied (70) vollständig anheben und gegen das Sieb (90) ziehen. Der Stabmagnet (80) hängt nun zumindest annähernd parallel unter dem Sieb (90), wobei die Umgriffe (79) des Hauptventilgliedes (80) am Sieb (90) anliegen. Der volle Unterdruck steht jetzt im Saugkanal (38) an.

Die öffnungs- und schließbedingte elastische Verformung des Hauptventilglieds lässt bei jedem Positionswechsel die angesetzte Holzverstaubung abplatzen, wodurch ein sicherer Betrieb ermöglicht wird.

Das als Saugventil bezeichnete Vorsteuermagnetventil schließt sich auch bei einem unbeabsichtigten Druckanstieg in einer der Vertiefungen (21, 22, 27) im Saugadapter (20), vgl. Figuren 8 und 9. Ein derartiger Druckanstieg kann sich durch eine Beschädigung des Saugadapters oder eine Beschädigung des Werkstückes ergeben. Im Werkstück kann sich z.B. ein offener Riss bilden oder ein Aststummel aus einem Astloch herausgesaugt werden. In diesen Fällen steigt im Saugkanal (38) der Druck durch einströmende Leckageluft - trotz geöffnetem Vorsteuerventil - so stark an, dass sich das Hauptventilglied (70) auf den Hauptventildichtsitz (61) abdichtend auflegt.

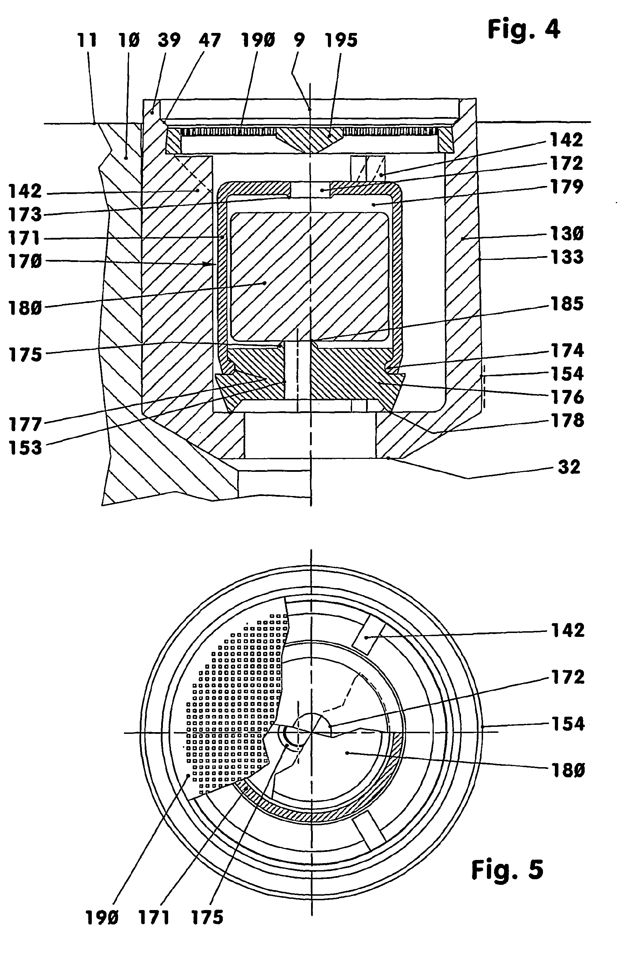

Die Figuren 4 bis 7 zeigen ein erfindungsgemäßes Ventil. Das Funktionsprinzip ist zwar identisch, jedoch haben das Hauptventilglied (170) und das Vorsteuerventilglied (180) teilweise eine andere Gestalt als die der Ventilglieder (70) und (80) der zuvor beschriebenen Variante.

Auch das Gehäuse (130) ist hier anders gestaltet. Die Außenkontur (133) verjüngt sich nach Figur 4 von unten nach oben. Aus dem bisherigen Dichtwulst (54) wird eine unten liegende Dichtzone (154). Dadurch sitzt das Gehäuse (130) nun im unteren Bereich über einen Klemmsitz in den Querbohrungen (14, 15) des Spannbalkens (10). Der obere Gehäusebereich, in dem das Sieb (190) eingesetzt ist, liegt in der jeweiligen Querbohrung nur mit geringem Spiel an. Hierdurch sitzt das Sieb (190) auch nach dem Einbau in die Querbohrung spannungsfrei im Siebsitzbereich (48).

Im Übergang zwischen der im Wesentlichen zylindrischen Außenkontur (133) und der unteren Stirnfläche (32) ist eine breite 31°-Fase angebracht. Letztere liegt großflächig am Grund der jeweiligen Querbohrung an. Die Fase ist an den Spitzenwinkel von 118° eines Standartspiralbohrers - mit dem die Querbohrungen (14, 15) gebohrt werden - angepasst.

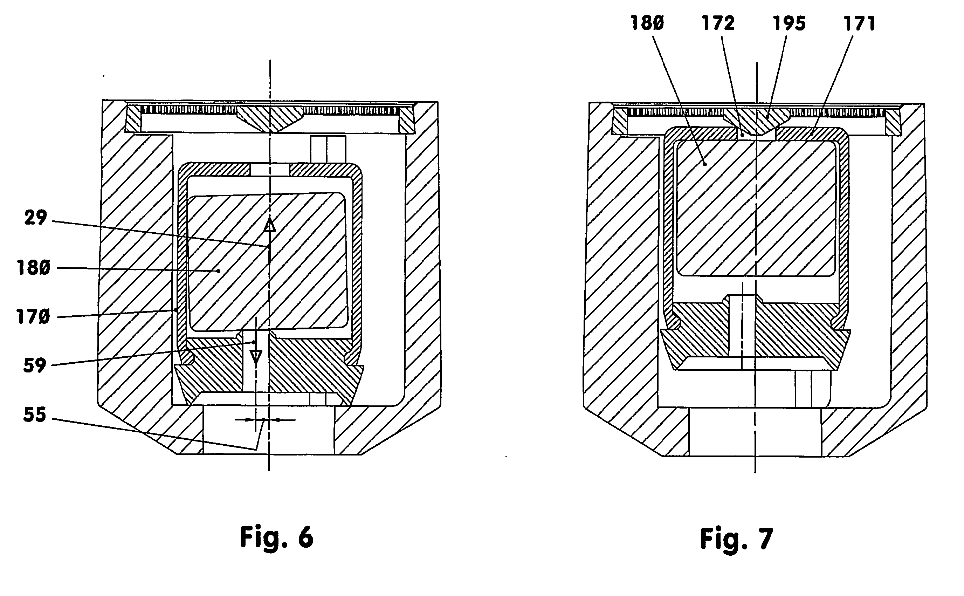

Ferner ist das Gehäuse (130), bei ungekürzter Gesamtlänge, vgl. Figur 4, am oberen Rand mit einer Gehäuseverlängerung (39) ausgestattet. Dabei liegt die Tiefe der Ausnehmung (14, 15) zwischen 92 und 97,5% der ungekürzten Saugventillänge. In der Bohrung der Gehäuseverlängerung (39) befindet sich eine 45°-Fase, die als Siebmontagefase (47) dient. Im vorliegenden Fall werden die in die Querbohrungen bzw. Ausnehmungen (14, 15) des Spannbalkens (10) eingesetzten Saugventile (1-6) nach dem Einpressen zusammen mit der Tischoberfläche (11) überarbeitet, z.B. überfräst oder überschliffen. Die Saugventile (1-6) bilden dann mit der Tischoberfläche (11) eine Ebene, vgl. Figuren 6 und 7.

Des Weiteren ist der Durchmesser im Ventilgliederbereich (36) vergrößert. Dieser Durchmesser entspricht hier z.B. 82,5% des Gesamtdurchmessers. In diesem Bereich sind beispielsweise drei ggf. äquidistant verteilte Längsstege (142) angeordnet, die radial nach innen - zur Gehäusemittellinie (9) hin - ragen. Der kleinste Durchmesser in diesem Bereich beträgt an den Stegvorderkanten nun z.B. 56% des Gesamtdurchmessers. Die Längsstege (142) erstrecken sich von der Dichtfläche (61) bis kurz vor den Siebsitzbereich (48). Ggf. sind sie zur leichteren Montage des Hauptventilgliedes im oberen Bereich angefast, vgl. gestrichelte Linien in Figur 4.

Auch das Hauptventilglied (170) hat nach den Figuren 4 - 7 einen einfacheren Aufbau. Es besteht nun aus zwei Teilen, dem Dichtungsboden (176) und dem Magnetgehäuse (171). Letzteres ist ein zylinderbüchsenförmiger, dünnwandiger Körper mit einer glatten Außenfläche. Es ist z.B. aus POM hergestellt und hat eine Härte von 90 Shore D. Sein unten offener Hintergriffsrand (174) ist nach innen gezogen. Im oberen Bodenbereich hat das Magnetgehäuse (171) eine z.B. zentrale Vorsteuerbohrung (172). Im Bereich der Vorsteuerbohrung (172) kann eine nach innen ragende Dichtlippe (173) angeordnet sein, vgl. Figur 4.

Der Bodenbereich des Magnetgehäuses (171) ist gegenüber der zylindrischen Außenwandung u.a. zur Verbesserung der Strömungsverhältnisse abgerundet.

Der Dichtungsboden (176) ist in erster Annäherung ein scheibenförmiger Körper mit einem exzentrisch angeordneten Vorsteuerkanal (153), einer Sitzkante (178) für das Hauptsteuerventil (170) und einer Taille (177) in Form einer Eindrehung als kraft- und formschlüssige Montagefuge. Er ist aus einem Nitril-Butadien-Kautschuk mit einer Härte von 75 Shore A gefertigt. In die Taille (177) rastert bei der Montage der Hintergriffsrand (174) des Magnetgehäuses (171) dichtend ein. Ggf. kann die Montagefuge auch als einfache Klebefuge gestaltet sein.

Der außermittige Vorsteuerkanal (153) ist von einem z.B. ringförmigen Auflageelement (175) umgeben. Es ist zusammen mit dem Kanal um die Exzentrizität (55), vgl. Figur 6, gegenüber der Mittellinie (9) versetzt. Die Exzentrizität beträgt z.B. 4% des Gesamtdurchmessers. Das sind hier etwa 50% des Durchmessers des Vorsteuerkanals (153). Die Exzentrizität und die Größe des oberen Randes des Auflageelements (175) sind so gewählt, dass das Schwerpunktslot des Stabmagnets (180) - sofern keine Magnetkraft auf ihn wirkt - immer innerhalb des oberen Randes liegt. Somit ist stets ein dichtes Schließen gewährleistet.

Beim Öffnen des Vorsteuerventils wirkt die Magnetkraft (29) im Schwerpunkt des Stabmagnets (180), vgl. Figur 6. Die kleinere Saugkraft (59) greift um die Exzentrizität (55) versetzt an der unteren Stirnfläche des Stabmagnets (180) an. Aufgrund des hierdurch vorgegebenen Moments kippt der Stabmagnet (180) zur Seite, um den Vorsteuerkanal (153) freizugeben.

Die Sitzkante (178) des Dichtungsbodens (176) hat einen mittleren Durchmesser von ca. 40% des Gesamtdurchmessers. Von der Sitzkante (178) aus verbreitert sich der Dichtungsboden (176) zum Magnetgehäuse (171) hin. Der größte Durchmesser des Dichtungsbodens (176) ist hierbei geringfügig größer als der maximale Durchmesser des Magnetgehäuses (171). Dadurch kann das Hauptventilglied (170) nicht an den Längsstegen (142) anhaften.

Ggf. kann die zylindrische Außenkontur des Magnetgehäuses (171) schraubenförmig gewundene Leitstege tragen, die das Hauptventilglied (170) bei jeder Positionsänderung kurzzeitig in eine Rotationsbewegung um die Mittellinie (9) versetzen. Diese Leitstege können auch gerade oder abgewinkelt ausgeführt sein. Bei einer Verwendung von Leitstegen, wird auf die Längsstege (142) im Gehäuse (130) verzichtet.

Der Stabmagnet (180) hat hier einen Durchmesser, der ca. 48% des Gesamtdurchmessers beträgt. Die Höhe ist um ca. 17% kleiner als der Durchmesser. Durch dieses Durchmesser-Höhenverhältnis ergibt sich gegenüber der ersten Variante eine vergrößerte Magnetkraft.

Das Sieb (190) hat in der Mitte ein als Dichtungselement ausgebildetes Siebzentrum (195). Letzteres ist ein kurzer, gasundurchlässiger, nach innen orientierter Kegelstumpf, eine Kalotte oder dergleichen. Das Siebzentrum (195) liegt gegenüber der Vorsteuerbohrung (172) des Hauptventilglieds (170). Dadurch verschließt bei offenem Ventil das Siebzentrum (195) die Vorsteuerbohrung (172) vollständig von oben. Von unten her wird es durch den dort anliegenden Stabmagneten (180) zusätzlich verschlossen. Somit fließt während der Saugphase - bei offenem Ventil - kein schutzhaltiger Gasstrom über den Vorsteuerkanal (153) durch das Hauptventilglied (170). Eine Verschmutzung des Innenraums (179) des Hauptventilglieds ist ausgeschlossen.

Beim Übergang von der Offenstellung zur Schließstellung hebt sich im Ausführungsbeispiel nach den Figuren 6 und 7 der Stabmagnet (180) um einen Hub, der ca. 17% des Gesamtdurchmessers entspricht. Der Hubanteil des Stabmagnets (180) im Innenraum (179) beträgt z.B. nur ein Drittel hiervon.

Für den Fall, dass außen am Magnetgehäuse (171) mehrere Leitstege angeordnet werden, wird das Siebzentrum (195) z.B. als Pyramide ausgebildet. Die Vorsteuerbohrung erhält eine entsprechende Gegenform. Auf diese Weise wird verhindert, dass das Hauptventilglied (170) während der Saugphase ununterbrochen rotiert. Der Formschluss kann selbstverständlich auch durch andere Formen realisiert werden.

### Bezugszeichenliste:

- 1-6: Saugventile im Spannbalken
- 7: Ansaugöffnung
- 8: Hauptabsaugöffnung
- 9: Gehäusemittellinie

- 10: Spanntisch, Spannbalken, Maschinentisch
- 11: Tischoberfläche
- 12: Vakuumzone, Kanalbohrung, vorn
- 13: Vakuumzone, Kanalbohrung, hinten
- 14: Querbohrungen, Ausnehmungen, vorn
- 15: Querbohrungen, Ausnehmungen, hinten

- 20: Saugadapter
- 21: untere Vertiefung, vorn
- 22: untere Vertiefung, hinten
- 23: Vierkantstab, vorn; ferromagnetisches Material
- 24: Vierkantstab, hinten; ferromagnetisches Material
- 26: Werkstückaufnahmefläche
- 27: Vertiefung, oben
- 28: Bohrung
- 29: Magnetkraft

- 30: Gehäuse, Saugventilgehäuse
- 31: Stirnfläche, oben
- 32: Stirnfläche, unten
- 35: Ansaugbereich, Längsbohrung
- 36: Ventilgliederbereich, Längsbohrung
- 37: Ausnehmung
- 38: Saugkanal
- 39: Gehäuseverlängerung

- 47: Siebmontagefase
- 48: Siebsitzbereich
- 49: Einkerbung

- 51: Mantelfläche, zylindrisch
- 53: Vorsteuerkanal
- 54: Dichtwulst
- 55: Exzentrizität von (53, 153)
- 59: Vorsteuersaugkraft

- 61: Hauptventildichtsitz, Dichtfläche

- 70: Hauptventilglied
- 71: Grundkörper
- 72: Sitzkante
- 73: Ausnehmung, zylindrisch
- 74: Ausnehmungsgrund
- 75: Auflageelemente, außermittig
- 76: Strömungskegel
- 77: Grundkontur, zylindrisch
- 78: Führungsstege
- 79: Umgriffe

- 80: Vorsteuerventilglied, Stabmagnet
- 85: Vorsteuerventilsitz
- 86: Kanäle
- 89: Spiel zwischen (70, 170) und (80, 180)

- 90: Sieb
- 91: Siebrand
- 92: Siebstruktur

- 130: Gehäuse, Saugventilgehäuse
- 133: Außenkontur

- 142: Längsstege

- 153: Vorsteuerkanal, zylindrisch
- 154: Dichtzone

- 170: Hauptventilglied
- 171: Magnetgehäuse
- 172: Vorsteuerbohrung
- 173: Dichtlippe
- 174: Hintergriffsrand
- 175: Auflageelemente, außermittig
- 176: Dichtungsboden
- 177: Taille
- 178: Sitzkante
- 179: Innenraum

- 180: Vorsteuerventilglied, Stabmagnet
- 185: Vorsteuerventilsitz

- 190: Sieb
- 195: Siebzentrum, Dichtungselement

## Patentansprüche

1. Ventil mit einem vorsteuernden magnetischen oder magnetisierbaren Vorsteuerventilglied (180) und einem Hauptventilglied (170) für ein in einer Holzbearbeitungsmaschine verwendetes Vakuumsystem, wobei
- die Holzbearbeitungsmaschine einen mit mindestens einer Vakuumzone durchzogenen Spanntisch (10) aufweist, der zwischen Vakuum führenden Kanälen (12, 13) und der Spanntischoberfläche (11) mindestens eine Bohrung (14, 15) zur Aufnahme des unter der Spanntischoberfläche (11) sitzenden Ventils hat,
- auf oder am Spanntisch (10) ein das Werkstück tragender Saugadapter (20) angeordnet ist, der in seiner der Spanntischoberfläche (11) zugewandten Seite zumindest bereichsweise aus einem Werkstoff oder einer Vorrichtung besteht, der oder die durch magnetische Wechselwirkung zumindest das Vorsteuerventilglied (180) anzieht, um dieses zu öffnen, so dass der Saugadapter (20) auf den Spanntisch (10) und/oder das Werkstück auf den Saugadapter (20) gesaugt wird bzw. werden,
- das Ventil ein Saugventilgehäuse (130) hat, in dem das Hauptventilglied (170) und das Vorsteuerventilglied (180) beweglich gelagert und geführt sind und
- das Saugventilgehäuse (130) mindestens eine Hauptabsaugöffnung und mindestens eine Ansaugöffnung hat,
**dadurch gekennzeichnet,**
- **dass** das Hauptventilglied (170) ein geschlossenes Gehäuse (171, 176) zum formschlüssigen umgreifen und zur - mit Spiel - führenden Aufnahme des Vorsteuerventilgliedes (180) ist, wobei in das Gehäuse (171, 176) mindestens ein Vorsteuerkanal (153) und mindestens eine Vorsteuerbohrung (172) mündet,
- **dass** die Hauptabsaugöffnung und der Vorsteuerkanal (153) der entsprechenden Vakuumzone (12, 13) zugewandt sind, wenn das Ventil in der Bohrung des Spanntisches (10) sitzt,
- **dass** das Vorsteuerventilglied (180) im Hauptventilglied (170) zwischen der Ansaugöffnung und dem Vorsteuerkanal (153) vor mindestens einem Vorsteuerventilsitz (185) angeordnet ist und - bei unbetätigtem Ventil - auf dem Vorsteuerventilsitz (185) dichtend aufliegt,
- **dass** die Vorsteuerbohrung (172) - bei betätigtem Ventil - durch das anliegende Vorsteuerventilglied (180) und/oder durch das dichtende Anliegen des Hauptventilglieds (170) an mindestens einem Teil (190) des Saugventilgehäuses (130) verschlossen ist,
- **dass** das Hauptventilglied (170) zwischen der Ansaugöffnung und der Hauptabsaugöffnung vor einem Hauptventildichtsitz angeordnet ist und - bei unbetätigtem Ventil - auf dem Hauptventildichtsitz dichtend aufliegt, und
- **dass** das Vorsteuerventilglied (180) das Hauptventilglied (170) zumindest bei einem Teil seines gesamten Öffnungshubes in Öffnungshubrichtung mitbewegt.

2. Ventil nach Anspruch 1, **dadurch gekennzeichnet, dass** das Gehäuse des Hauptventilgliedes (170) zweiteilig aufgebaut aus einem Magnetgehäuse (171) und einem Dichtungsboden (176) besteht.

3. Ventil nach Anspruch 2, **dadurch gekennzeichnet, dass** das Magnetgehäuse (171) und der Dichtungsboden (176) aus verschieden Werkstoffen hergestellt sind und in einer Horizontalen Trennfuge miteinander verbunden sind.

4. Ventil nach Anspruch 1, **dadurch gekennzeichnet, dass** das Saugventilgehäuses (130) im Bereich der Ansaugöffnung ein im Vakuumstrom liegendes Sieb (190) hat.

5. Ventil nach Anspruch 4, **dadurch gekennzeichnet, dass** sich die Außenkontur (133) des Saugventilgehäuses (130) sich zum Sieb (190) hin verjüngt.

6. Ventil nach Anspruch 4, **dadurch gekennzeichnet, dass** das Sieb (190) im mittleren Bereich ein nach innen ragendes Dichtungselement (195) hat, das zum dichten Verschließen der Vorsteuerbohrung (172) eine entsprechende Gestalt hat.

7. Ventil nach Anspruch 1, **dadurch gekennzeichnet, dass** die Länge des Ventils nur um maximal 10% länger ist als sein maximaler Durchmesser.

8. Ventil nach Anspruch 1, **dadurch gekennzeichnet, dass** der engste Querschnitt des Vorsteuergasstromes kleiner ist als ein Fünfzehntel des Querschnitts des Hauptventilgasstromes.

## Claims

1. Valve comprising a magnetic or magnetizable pilot valve member (180) and a main valve member (170) for a suction system for use in a wood working machine, wherein
- said wood working machine comprises a working table (10) having at least one vacuum zone extending therethrough, said working table having between vacuum-carrying ducts (12, 13) and the working table surface (11) at least one bore (14, 15) for receiving said valve disposed underneath working table surface (11);
- a workpiece-carrying suction adapter (20) is provided on or at working table (10), said suction adapter consisting at least in portions of its side facing working table surface (11) of a material or a device exerting an attractive force on at least said pilot valve member (180) by magnetic interaction so as to open said pilot valve member (180) and to so attract suction adapter (20) down onto working table (10) and/or said workpiece down onto suction adapter (20);
- said valve comprises a vacuum valve housing (130) for moveably supporting and guiding main valve member (170) and pilot valve member (180); and
- vacuum valve housing (130) has therethrough at least one main suction exhaust aperture and at least one suction intake aperture;
- **characterized in that**
- main valve member (170) constitutes an enclosed housing (171, 176) for receiving pilot valve member (180) in a form-fitting and loosely guided manner, with at least one pilot channel (153) and at least one pilot bore (172) opening into housing (171, 176);
- said main suction exhaust aperture and pilot channel (153) are disposed facing the respective vacuum zone (12, 13) when the valve is seated in the bore of working table (10);
- pilot valve member (180) is disposed in main valve member (170) between suction intake aperture and pilot channel (153) in front of at least one pilot valve seat (185) to sealingly engage pilot valve seat (185) when the valve is deactivated;
- pilot bore (172) is sealed in the engaged position of main valve member (180) and/or the sealing engagement of main valve member (170) on at least a portion (190) of vacuum valve housing (130) when said valve is activated;
- main valve member (170) is disposed between said suction intake aperture and said main suction exhaust aperture in front of a main valve sealing seat and sealingly engages main valve seal seat when said valve is deactivated; and **in that**
- pilot valve member (180) entrains main valve member (170) in at least a portion of its total opening stroke in the opening stroke direction.

2. Valve as in claim 1, **characterized by** the housing of main valve member (170) being a two-piece construction made up of a magnetic housing (171) and a sealing bottom member (176).

3. Valve as in claim 2, **characterized in that** magnetic housing (171) and sealing bottom member (176) are made of different materials and are connected with each other along a horizontal splitline.

4. Valve as in claim 1, **characterized by** vacuum valve housing (130) comprising a sieve (190) disposed within the suction flow path in the area of the suction intake aperture.

5. Valve as in claim 4, **characterized by** the outer contours (133) of vacuum valve housing (130) tapering towards sieve (190).

6. Valve as in claim 4, **characterized by** sieve (190) having in the central portion thereof an inwardly protruding sealing element (195) shaped to seal pilot bore (172).

7. Valve as in claim 1, **characterized by** the length of said valve being not more than 10 % longer than its maximum diameter.

8. Valve as in claim 1, **characterized by** the smallest cross-section area of the pilot gas flow being smaller than one fifteenth the cross-sectional area of the main valve gas flow.

## Revendications

1. Soupape composée d'un élément pilote (180) magnétique ou magnétisable et d'un élément principal (170) pour un système sous vide utilisé dans une machine à bois,
- la machine à bois étant équipée d'une table de serrage (10) qui intègre au moins une zone à vide et qui présente au moins une forure (14, 15), placée entre des canaux de vide (12, 13) et la surface de la table de serrage (11), pour recevoir la soupape qui se trouve sous la surface de la table de serrage (11),
- un adaptateur d'aspiration (29) qui porte la pièce à travailler étant placé sur la table ou à la table de serrage (10) dont le côté ou tout au moins une partie du côté orienté vers la surface de la table de serrage (11) consiste en une matière ou un dispositif qui, par interaction magnétique, attire l'élément pilote (180) afin de l'ouvrir, ce qui fait que l'adaptateur d'aspiration (20) est aspiré sur la table de serrage (10) et/ou que la pièce à travailler est aspiré sur l'adaptateur d'aspiration (20),
- la soupape étant équipée d'un boîtier d'aspiration (130) dans lequel l'élément principal (170) et l'élément pilote (180) de la soupape sont logés et guidée de façon mobile et
- le boîtier de la soupape d'aspiration (130) ayant au moins un orifice principal d'évacuation et au moins un orifice d'admission,
**caractérisé en ce**
- **qu**e l'élément principal de la soupape (170) est un boîtier fermé (171, 176) adapté à la forme et destiné à la réception guidée, avec du jeu, de l'élément pilote de la soupape (180), avec au moins un canal (153) et avec au moins une forure (172) de la commande pilote qui débouchent dans le boîtier (171, 176),
- que l'orifice principal d'évacuation et le canal de la commande pilote (153) sont orientés vers la zone de vide correspondante (12, 13), lorsque la soupape est engagée dans la forure de la table de serrage (10),
- que l'élément pilote (180) dans l'élément principal (170) de la soupape, entre l'orifice d'admission et le canal de la commande pilote (153), est placé devant au moins un siège d'étanchéité (185) et appuie, lorsque la soupape n'est pas activée, contre le siège d'étanchéité tout en assurant l'échanchéité,
- que la forure de la commande pilote (172) est fermée, lorsque la soupape est activée, par l'élément pilote (180) et/ou par le contact étanche de l'élément principal (170) avec au moins une partie (190) du boîtier d'aspiration (130)
- que l'élément principal de la soupape (170) est placé, entre l'orifice d'admission et l'orifice principal d'évacuation, devant un siège d'étanchéité de l'élément principal et appuie, lorsque la soupape n'est pas activée, contre le siège d'étanchéité tout en assurant l'échanchéité et,
- que l'élément pilote de la soupape (180) entraîne l'élément principal (170) tout au moins pendant une partie de la totalité de sa course d'ouverture, dans la direction de la course.

2. Soupape selon la revendication 1, **caractérisée en ce que** le boîtier de l'élément principal de la soupape (170) est en deux parties, constituées d'un boîtier comportant l'aimant (171) et d'un fond d'étanchéité (176).

3. Soupape selon la revendication 2, **caractérisée en ce que** le boîtier comportant l'aimant (171) et le fond d'étanchéité (176) sont fabriqués de matériaux différents et sont reliés par un joint horizontal de séparation.

4. Soupape selon la revendication 1, **caractérisée en ce que** le boîtier de la soupape d'aspiration est équipé d'un tamis (190) qui se trouve dans le flux du vide, à la hauteur de l'orifice d'évacuation.

5. Soupape selon la revendication 4, **caractérisée en ce que** le profil extérieur (133) du boîtier de la soupape d'aspiration (130) diminue vers le tamis (190).

6. Soupape selon la revendication 4, **caractérisée en ce que** le tamis (190), dans son milieu, présente un élément d'étanchéité (195) qui est avancé vers l'intérieur et qui a une forme permettant la fermeture hermétique de la forure de la commande pilote (172).

7. Soupape selon la revendication 1, **caractérisée en ce que** la longueur de la soupape est plus longue au maximum de 10% que son diamètre maximal.

8. Soupape selon la revendication 1, **caractérisée en ce que** la section la plus serrée du flux de gaz de la commande pilote est inférieure à un quinzième de la section du flux de gaz de la soupape principale.
